# EUROPEAN PATENT APPLICATION

(11) **EP 3 928 880 A1**
(43) Date of publication of application: **29.12.2021**
(21) Application number: 21757270.0
(22) Date of filing: 28.01.2021
(51) Int. Cl.: B05D 5/02, B05D 3/06, B05D 3/04, C09D 4/06, C09D 4/02

(54) **PREPARATION METHOD FOR SUPER-MATTE PLATE**

(30) Priority: 19.02.2020 CN 202010105816; 18.01.2021 CN 202110064371
(71) Applicant: Zhejiang Kingdom New Material Group Co., Ltd., Jiaxing City Zhejiang Province (CN)
(72) Inventor: DAI, Huibin, Tongxiang Zhejiang 314516 (CN); ZHANG, Zhongfei, Tongxiang Zhejiang 314516 (CN); WANG, Tao, Tongxiang Zhejiang 314516 (CN); DONG, Lijie, Tongxiang Zhejiang 314516 (CN)
(74) Representative: Loo, Chi Ching
(86) International application number: PCT/CN2021/074146
(87) International publication number: WO 2021/164518

(57) **Abstract**

The present disclosure provides a manufacturing method of an ultra-matte board, which includes a semi-curing step, an irradiating step with an ultraviolet excimer lamp and a full curing step. The semi-curing step includes: coating a UV paint on a substrate, and irradiating the coated substrate with an ultraviolet lamp with a wavelength ranging from 350 nm to 450 nm to semi-cure the UV paint; the irradiating step with the ultraviolet excimer lamp includes: placing the semi-cured substrate in an inert gas atmosphere and irradiating the substrate with an ultraviolet excimer lamp for 2 s to 20 s; and the full curing step includes: irradiating with an ultraviolet lamp with a wavelength ranging from 350 nm to 450 nm to fully cure the UV paint to obtain the ultra-matte board.

## Description

### TECHNICAL FIELD

The disclosure relates to a technical field of boards, in particular to a manufacturing method of an ultra-matte board.

### BACKGROUND ART

A matte board has a non-glossy surface, which can avoid light pollution and is convenient to maintain. It can be used in floors, furniture, ceilings, walls, doors and other fields, while an ultra-matte board refers to a board with a glossiness of up to 1 GU to 5 Gu when measured at a measuring angle of 60°.

In the market, a way to produce the ultra-matte board is to coat a matte paint with a matting agent added. The resulting ultra-matte board not only has visual defects and poor touch feeling, but also limits a chemical and physical strong GU on a surface of the board, which has a negative impact on production cost and consumers. Further, the matte board manufactured in this way is generally divided into two steps: surface drying and hard drying. During this processing, the matting agent in the matte paint decomposes, and thus the glossiness will easily increase during the processing. The matte paint refers to a paint with a lower gloss compared to a varnish, which usually can be divided into two categories: a semi-matte paint (with a glossiness of around 40 to 60) and a full-matte paint (with a glossiness below 30).

Secondly, existing common production of the ultra-matte board requires a single topcoating or two topcoating to be made on a primer with a matte coating. A glossiness of the single topcoating is high, so it is difficult to achieve an ultra-matte effect; the two topcoatings is with a large coating amount, with a slightly lower glossiness, but with a rough apparent effect and poor touch feeling.

Furthermore, an existing manufacturing method of the matte board is not desirable for a substrate with an uneven surface structure.

### SUMMARY

An object of the disclosure is to provide a manufacturing method of an ultra-matte board which only needs a single topcoating and has good touch feeling.

In order to solve above technical problems, the present disclosure provides a manufacturing method of an ultra-matte board, which includes a semi-curing step, an irradiating step with an ultraviolet excimer lamp and a full curing step. The semi-curing step includes: coating a UV paint on a substrate, and irradiating the coated substrate with an ultraviolet lamp with a wavelength ranging from 350 nm to 450 nm to semi-cure the UV paint; the irradiating step with the ultraviolet excimer lamp includes: placing the semi-cured substrate in an inert gas atmosphere and irradiating the substrate with an ultraviolet excimer lamp for 2 s to 20 s; and the full curing step includes: irradiating with an ultraviolet lamp with a wavelength ranging from 350 nm to 450 nm to fully cure the UV paint to obtain the ultra-matte board.

The ultraviolet lamps in the full curing step and the semi-curing step in the disclosure are long-wave ultraviolet lamps with a wavelength ranging from 350 nm to 450 nm. The semi-curing is made with a low-energy long-wave ultraviolet lamp first, and then the irradiating is made with a high-energy ultraviolet excimer lamp in the inert gas atmosphere to make the surface generate microscopic wrinkles and become matte, but without curing which is because the UV paint will not be cured under a wavelength band of the ultraviolet excimer lamp, and finally the fully curing is made with a long-wave ultraviolet lamp, the semi-curing, the irradiating with the ultraviolet excimer lamp and the full curing are three independent and different steps, in which the inert gas atmosphere is configured to remove oxygen, so that the excimer lamp can operate normally and rays can penetrate better. The inventor of the present disclosure also tried to combine the semi-curing step and the irradiating step with the ultraviolet excimer lamp, or combine the full-curing step and the irradiating step with the ultraviolet excimer lamp, but an amount of heat of the curing lamp is very large, and the final product presents poor effect. And the glossiness of the ultra-matte board finally obtained in the disclosure can reach 1 GU to 5 GU, with good touch feeling.

In addition, the substrate in the disclosure does not need any pretreatment, such as sanding treatment and the like, and the finally obtained product presents excellent effect. Only when the room temperature is low, the manufacturing method of the ultra-matte board further includes a preheating step before the semi-curing step, and the preheating step includes preheating the substrate to 20°C to 30°C. Furthermore, although the disclosure needs to adopt the ultraviolet excimer lamp, it is used in combination with the ultraviolet lamp with the wavelength ranging from 350 nm to 450 nm, and the ultraviolet excimer lamp and the ultraviolet lamp with the wavelength ranging from 350 nm to 450 nm irradiate separately, so that treatment time of the ultraviolet excimer lamp is very short, which only needs 2 s to 20 s. Secondly, there is no requirement for the matting agent in the UV paint in this disclosure, which may or may not include the matting agent, and the glossiness of a final product can reach 1 GU to 5 GU.

For example, the UV paint is an acrylic resin UV paint. By comparing final effects of various types of UV paints, the inventor of the present disclosure finds that the acrylic resin UV paint presents the best effect, and the UV paint can include following components by weight:
30%-50% of acrylic resin,
25%-45 % of tripropylene glycol diacrylate,
1%-5 % of 2-hydroxy-2-methyl-l-phenyl-l-propanone.

As another example, the UV paint may include following components by weight:
20%- 50% of acrylic resin,
15%- 45% of tripropylene glycol diacrylate,
1%-5% of 2-hydroxy-2-methyl-1-phenyl-1-propanone,
5% - 15% of fumed silica.

Further, the UV paint may include following components by weight:
20%-40% of acrylic resin,
15%- 35% of tripropylene glycol diacrylate,
1% - 5% of 2-hydroxy-2-methyl-1-phenyl-1-propanone,
5% - 15% of fumed silica.

Optionally, irradiation energy of the ultraviolet lamp used in the semi-curing step is 50 mJ/cm²- 150 mJ/cm², and irradiation energy of the ultraviolet lamp used in the curing step is 400 mJ/cm²- 800 mJ/cm².

Optionally, when a coating method is a roller coating, coating amount of the UV paint is 8 g/m²- 15 g/m². When the coating amount of the UV paint is high, for example, when the coating amount is higher than 15 g/m², the irradiation time of the UV lamp is long, and it is necessary to add a proper amount of UV absorber and antioxidant in the UV paint to resist yellowing. The coating amount is associated with the coating method.

Optionally, the surface of the substrate is of unevenness. The unevenness can be natural texture of stone or wooden boards, or manually arranged uneven structures around door panels, and can also be uneven texture made by one or any combination of roller coating, spray coating, transfer printing and digital printing processes.

Optionally, the inert gas is any one or combination of nitrogen, neon, argon, krypton and xenon, a charging pressure of the inert gas is equal to or more than 6 bar, purity of the inert gas is equal to or more than 99.999%, and a flow rate of the inert gas is equal to or more than 80 m³/h.

Optionally, a coating method of the UV paint includes any one or combination of printing process, rolling, curtain coating, knife coating, flow coating, dip coating, spray coating, spin coating and film pressing, and the printing process includes any one or combination of gravure printing, flexographic printing, screen printing, pad printing or inkjet printing and transfer printing.

Optionally, the ultraviolet lamp used in the semi-curing step includes any one or combination of a mercury lamp, a gallium lamps, an iron lamp and a LED lamp, and the ultraviolet lamp used in the full-curing step includes any one or combination of a mercury lamp, a gallium lamp and an iron lamp. The ultraviolet lamp used in the semi-curing step may or may not be same as that used in the full-curing step. A selection of the ultraviolet lamp is associated with a type of the UV paint, and if the UV paint is specific to 365 nm, the mercury lamp is optimal. If the UV paint is moved toward 385 nm, the iron lamp is optimal. If the UV paint is moved toward 420 nm, the gallium lamp is optimal. When using the UV paint with or without the matting agent as described above, the mercury lamp is optimal. The LED lamp can be used in the semi-curing step, but cannot be used in the full-curing step, because a band of the LED lamp is not suitable for the full-curing step in this method.

Optionally, an irradiation distance of the ultraviolet excimer lamp in the irradiating step with the ultraviolet excimer lamp is 5 cm- 20 cm. Preferably, the irradiation distance of the ultraviolet excimer lamp in the irradiating step with the ultraviolet excimer lamp is 10 cm.

Optionally, the wavelength of the ultraviolet excimer lamp is 172 nm, power of the ultraviolet excimer lamp is 0.7 kw, and energy of the ultraviolet excimer lamp can be adjusted in a range of 10%- 100%.

Optionally, the substrate can be a SPC, LVT, WPC board, or digital printed plastic floor with untreated surfaces, or a wooden board, or a wall surface, a countertop, furniture, a cabinet door or other trim panels.

Optionally, the semi-curing step includes: irradiating the substrate coated with the UV paint with the ultraviolet lamp with the wavelength ranging from 350 nm to 450 nm at a speed of 15 m/min to 25 m/min to semi-cure the UV paint.

The irradiating step with the ultraviolet excimer lamp includes: passing the semi-cured substrate through the ultraviolet excimer lamp device and irradiating the substrate with the ultraviolet excimer lamp for 2 s- 20 s, with the inert gas being continuously introduced into the ultraviolet excimer lamp device.

The full curing step includes: irradiating the substrate irradiated by the ultraviolet excimer lamp with the ultraviolet lamp with the wavelength ranging from 350 nm to 450 nm at a speed of 15 m/min to 25 m/min, to fully cure the UV paint and obtain the ultra-matte board.

The apparatus used in the disclosure is an efficient intelligent UV dryer with a model of PRT-EX2113.

To sum up, in the present disclosure, the semi-curing is made with a low-energy long-wave ultraviolet lamp first, and then the irradiating is made with a high-energy ultraviolet excimer lamp in the inert gas atmosphere to make the surface generate microscopic wrinkles, and finally the fully curing is made with a long-wave ultraviolet lamp, in which the inert gas atmosphere is configured to remove oxygen. The glossiness of the finally obtained ultra-matte board can reach 1 GU to 5 GU, with good touch feeling. In addition, the substrate in the disclosure does not need any pretreatment, such as sanding treatment and the like, and the finally obtained product presents excellent effect. Only when the room temperature is low, the manufacturing method of the ultra-matte board further includes a preheating step before the semi-curing step, and the preheating step includes preheating the substrate to 20°C to 30°C. Furthermore, although the disclosure needs to adopt the ultraviolet excimer lamp, it is used in combination with the ultraviolet lamp with the wavelength ranging from 350 nm to 450 nm, and the ultraviolet excimer lamp and the ultraviolet lamp with the wavelength ranging from 350 nm to 450 nm irradiate separately, so that treatment time of the ultraviolet excimer lamp is very short, which only needs 2 s to 20 s. Secondly, there is no requirement for the matting agent in the UV paint in this disclosure, which may or may not include the matting agent, and the glossiness of a final product can reach 1 GU to 5 GU.

### DETAILED DESCRIPTION

The specific implementations of the present disclosure will be described in further detail with reference to embodiments. The following examples serve to illustrate the present disclosure, but are not intended to limit a scope of the present disclosure.

All ranges in the present disclosure include endpoints.

In the present disclosure, good touch feeling refers to approximating skin feeling.

In each of both embodiments and comparative embodiments of the present disclosure, a coating amount of roller coating is all 12 g/m², a coating amount of curtain coating is 100 g/m², and a coating amount of spray coating is 80 g/m².

Semi-curing in the present disclosure means that flowing does not occur on a surface of the UV paint.

### Comparative Embodiment 1

In step S01, a substrate is manufactured, which is a PVC board in this embodiment.

In step S02, the UV paint without a matting agent is curtain coated on the substrate, and the coated substrate is irradiated with an ultraviolet lamp with a wavelength ranging from 350 nm to 450 nm to fully cure the UV paint with irradiation energy of the ultraviolet lamp of 600 mJ/cm2.

A finally obtained product was tested by a gloss meter at a measuring angle of 60-degree, and its tested glossiness was 90 GU.

The UV paint includes following components by weight:
50% of acrylic resin,
45% of tripropylene glycol diacrylate,
5 % of 2-hydroxy-2-methyl-l-phenyl-l-propanone.

### Comparative Embodiment 2

A method in Comparative Embodiment 2 is basically the same as that of Comparative Embodiment 1, except that the UV paint in Step S02 of Comparative Embodiment 2 is roller coated.

A finally obtained product was tested by a gloss meter at a measuring angle of 60-degree, and its tested glossiness was 78 GU.

### Comparative Embodiment 3

A method in Comparative Embodiment 3 is basically the same as that of Comparative Embodiment 1, except that the UV paint in Step S02 of Comparative Embodiment 3 is spray coated.

A finally obtained product was tested by a gloss meter at a measuring angle of 60-degree, and its tested glossiness was 100 GU.

### Comparative Embodiment 4

A method in Comparative Embodiment 4 is basically the same as that of Comparative Embodiment 1, except that the UV paint in Step S02 of Comparative Embodiment 4 is with the matting agent.

A finally obtained product was tested by a gloss meter at a measuring angle of 60-degree, and its tested glossiness was 8 GU.

The UV paint includes following components by weight:
45% of acrylic resin,
35% of tripropylene glycol diacrylate,
5 % of 2-hydroxy-2-methyl-1-phenyl-1-propanone,
15% of fumed silica.

### Comparative Embodiment 5

In step S01, a substrate is manufactured, which is a PVC board in this embodiment.

In step S02, 100 g/m² of the UV paint without the matting agent is curtain coated on the substrate, the coated substrate is irradiated with the ultraviolet lamp with the wavelength ranging from 350 nm to 450 nm to semi-cure the UV paint with curing energy of 100 mJ/cm², and the coated substrate is irradiated with the ultraviolet lamp with the wavelength ranging from 350 nm to 450 nm to fully cure the UV paint with curing energy of 500 mJ/cm².

A finally obtained product was tested by a gloss meter at a measuring angle of 60-degree, and its tested glossiness was 90 GU.

The UV paint includes following components by weight:
50% of acrylic resin,
45% of tripropylene glycol diacrylate,
5% of 2-hydroxy-2-methyl-l-phenyl-l-propanone.

### Embodiment 1

In step S01, a substrate is manufactured, which is a PVC board in this embodiment.

In step S02, the UV paint without the matting agent is curtain coated on the substrate, and the coated substrate is irradiated with an ultraviolet lamp with a wavelength ranging from 350 nm to 450 nm to semi-cure the UV paint with semi-curing energy of 100 mJ/cm².

In step S03, the semi-cured substrate is placed in helium atmosphere with a flow rate of helium of 100 m³/h, and irradiated with an ultraviolet excimer lamp for 10 s with energy of the ultraviolet excimer lamp being adjusted to 15%.

In step S04: an irradiation is made with the ultraviolet lamp with the wavelength ranging from 350 nm to 450 nm to fully cure the UV paint to obtain the ultra-matte board, with full curing energy of 500 mJ/cm².

A finally obtained product was tested by a gloss meter at a measuring angle of 60-degree, and its tested glossiness was 1.7 GU and with good touch feeling.

The UV paint in Embodiment 1 is the same as that in Comparative Embodiment 1.

### Embodiment 2

A method in Embodiment 2 is basically the same as that of Embodiment 1, except that the UV paint in Step S02 of Comparative Embodiment 2 is roller coated.

A finally obtained product was tested by a gloss meter at a measuring angle of 60-degree, and its tested glossiness was 1.5 GU and with good touch feeling.

### Embodiment 3

A method in Embodiment 3 is basically the same as that of Embodiment 1, except that the UV paint in Step S02 of Embodiment 3 is spray coated.

A finally obtained product was tested by a gloss meter at a measuring angle of 60-degree, and its tested glossiness was 2.0 GU and with good touch feeling.

The UV paint includes following components by weight:
30% of acrylic resin,
45% of tripropylene glycol diacrylate,
5% of 2-hydroxy-2-methyl-l-phenyl-l-propanone.

### Embodiment 4

A method in Embodiment 4 is basically the same as that in embodiment 3, except that the ultraviolet excimer lamp is used for irradiation for 15 s in step S03 in Embodiment 4.

A finally obtained product was tested by a gloss meter at a measuring angle of 60-degree, and its tested glossiness was 1.3 GU and with good touch feeling.

### Embodiment 5

A method in Embodiment 5 is basically the same as that in Embodiment 3, except that the UV paint in Step S02 in Comparative Embodiment 5 is with the matting agent, and the energy of the UV excimer lamp is turned on to 15%.

A finally obtained product was tested by a gloss meter at a measuring angle of 60-degree, and its tested glossiness was 1.1 GU and with good touch feeling.

The UV paint of Embodiment 5 is the same as that of Comparative Embodiment 4.

### Embodiment 6

A method in Embodiment 6 is basically the same as that in embodiment 5, except that the ultraviolet excimer lamp is used for irradiation for 5 s in step S03 in Embodiment 6.

Further, the UV paint in Embodiment 6 includes following components by weight:
50% of acrylic resin,
40% of tripropylene glycol diacrylate,
5% of 2-hydroxy-2-methyl-1-phenyl-1-propanone,
5% of fumed silica.

A finally obtained product was tested by a gloss meter at a measuring angle of 60-degree, and its tested glossiness was 1.5 GU and with good touch feeling.

### Embodiment 7

A method in Embodiment 7 is basically the same as that in embodiment 5, except that the ultraviolet excimer lamp is used for irradiation for 3 s in step S03 in Embodiment 7.

Further, the UV paint in Embodiment 7 includes following components by weight:
40% of acrylic resin,
45% of tripropylene glycol diacrylate,
5% of 2-hydroxy-2-methyl-1-phenyl-1-propanone,
10% of fumed silica.

A finally obtained product was tested by a gloss meter at a measuring angle of 60-degree, and its tested glossiness was 2.1 GU and with good touch feeling.

### Embodiment 8

A method in Embodiment 8 is basically the same as that of Embodiment 1, except that the energy of the ultraviolet excimer lamp in Step S03 of Comparative Embodiment 8 is adjusted to 10%.

A finally obtained product was tested by a gloss meter at a measuring angle of 60-degree, and its tested glossiness was 3.2 GU and with good touch feeling.

### Embodiment 9

A method in Embodiment 9 is basically the same as that of Embodiment 1, except that the energy of the ultraviolet excimer lamp in Step S03 of Comparative Embodiment 9 is adjusted to 12%.

A finally obtained product was tested by a gloss meter at a measuring angle of 60-degree, and its tested glossiness was 2.4 GU and with good touch feeling.

### Embodiment 10

A method in Embodiment 10 is basically the same as that of Embodiment 1, except that the energy of the ultraviolet excimer lamp in Step S03 of Comparative Embodiment 10 is adjusted to 15%.

A finally obtained product was tested by a gloss meter at a measuring angle of 60-degree, and its tested glossiness was 1.7 GU and with good touch feeling.

### Embodiment 11

A method in Embodiment 11 is basically the same as that of Embodiment 1, except that the energy of the ultraviolet excimer lamp in Step S03 of Comparative Embodiment 11 is adjusted to 18%.

A finally obtained product was tested by a gloss meter at a measuring angle of 60-degree, and its tested glossiness was 1.3 GU and with good touch feeling.

### Embodiment 12

A method in Embodiment 12 is basically the same as that of Embodiment 1, except that the energy of the ultraviolet excimer lamp in Step S03 of Comparative Embodiment 12 is adjusted to 20%.

A finally obtained product was tested by a gloss meter at a measuring angle of 60-degree, and its tested glossiness was 1.1 GU and with good touch feeling.

### Embodiment 13

A method in Embodiment 13 is basically the same as that of Embodiment 1, except that the energy of the ultraviolet excimer lamp in Step S03 of Comparative Embodiment 13 is adjusted to 23%.

A finally obtained product was tested by a gloss meter at a measuring angle of 60-degree, and its tested glossiness was 1.1 GU and with good touch feeling.

### Embodiment 14

A method in Embodiment 14 is basically the same as that in Embodiment 10, except that the UV paint in Comparative Embodiment 14 is spray coated, and the UV excimer lamp is used for irradiation for 15 s and a flow rate of nitrogen is 40 m³/h in Step S03.

A finally obtained product was tested by a gloss meter at a measuring angle of 60-degree, and its tested glossiness was 38 GU and with poor touch feeling.

### Embodiment 15

A method in Embodiment 15 is basically the same as that of Embodiment 14, except that the flow rate of nitrogen in step S03 in Comparative Embodiment 15 is 60 m³/h.

A finally obtained product was tested by a gloss meter at a measuring angle of 60-degree, and its tested glossiness was 22 GU and with ordinary touch feeling.

### Embodiment 16

A method in Embodiment 16 is basically the same as that of Embodiment 14, except that the flow rate of nitrogen in step S03 in Comparative Embodiment 16 is 70 m³/h.

A finally obtained product was tested by a gloss meter at a measuring angle of 60-degree, and its tested glossiness was 11 GU and with good touch feeling.

### Embodiment 17

A method in Embodiment 17 is basically the same as that of Embodiment 14, except that the flow rate of nitrogen in step S03 in Comparative Embodiment 17 is 75 m³/h.

A finally obtained product was tested by a gloss meter at a measuring angle of 60-degree, and its tested glossiness was 4.7 GU and with good touch feeling.

### Embodiment 18

A method in Embodiment 18 is basically the same as that of Embodiment 14, except that the flow rate of nitrogen in step S03 in Comparative Embodiment 18 is 80 m³/h.

A finally obtained product was tested by a gloss meter at a measuring angle of 60-degree, and its tested glossiness was 1.3 GU and with good touch feeling.

### Embodiment 19

A method in Embodiment 19 is basically the same as that of Embodiment 14, except that the flow rate of nitrogen in step S03 in Comparative Embodiment 19 is 90 m³/h.

A finally obtained product was tested by a gloss meter at a measuring angle of 60-degree, and its tested glossiness was 1.2 GU and with good touch feeling.

### Embodiment 20

A method in Embodiment 20 is basically the same as that of Embodiment 14, except that the flow rate of nitrogen in step S03 in Comparative Embodiment 20 is 100 m³/h.

A finally obtained product was tested by a gloss meter at a measuring angle of 60-degree, and its tested glossiness was 1.2 GU and with good touch feeling.

### Embodiment 21

In step S01, a substrate is manufactured, which is a wooden door board with concave or convex edges on the surface.

In step S02, 80 g/m² of the UV paint without the matting agent is spray coated on the substrate, the coated substrate is irradiated with the ultraviolet lamp with the wavelength ranging from 350 nm to 450 nm to semi-cure the UV paint with curing energy of 100 mJ/cm².

In step S03, the semi-cured substrate is placed in helium atmosphere with a flow rate of 100 m³/h, and irradiated with the ultraviolet excimer lamp for 10 s with energy of the ultraviolet excimer lamp being adjusted to 15%.

In step S04, the coated substrate is irradiated with the ultraviolet lamp with the wavelength ranging from 350 nm to 450 nm to fully cure the UV paint with curing energy of 500 mJ/cm².

A finally obtained product was tested by a gloss meter at a measuring angle of 60-degree, and its tested glossiness was 2 GU and with substantial surface touch feeling and skin feeling.

The UV paint includes following components by weight:
50 % of acrylic resin,
45% of tripropylene glycol diacrylate,
5% of 2-hydroxy-2-methyl-l-phenyl-l-propanone.

By comparing Comparative Embodiments 1 to 3 and Embodiments 1 to 3 respectively, no matter what coating method is adopted, such as spray coating, roller coating or curtain coating, the glossiness of the products obtained by the manufacturing method of the present disclosure is less than or equal to 1.5 GU, and with good touch feeling.

By comparing Embodiments 5 to 7, effect of Embodiment 5 is better than that of Embodiment 6, and effects of Embodiment 5 and Embodiment 6 are both better than that of Embodiment 7.

By comparing Embodiments 8 to 13, the energy of the UV excimer lamp has great influence on the glossiness of the final product, and the effect is optimal when the energy of the UV excimer lamp is 15%- 23%.

In addition, by comparing Embodiments 14 to 20, when the flow rate of nitrogen in Step S03 is greater than or equal to 80 m³/h, the glossiness of the final product is 1.3 GU or less and with good touch feeling, and the flow rate of nitrogen has a great influence on the glossiness of the final product. By comparing Embodiments 3 and 21, the method is not only suitable for flat substrates, but also for substrates of unevenness; and the glossiness of the product prepared in Embodiment 21 is 2 GU and with substantial surface touch feeling and skin feeling.

Although substantially PVC boards or door panels are adopted in various embodiments of the present disclosure, the manufacturing method of the present disclosure is also applicable to SPC, LVT, WPC boards, or digital printed plastic floors, or wall surfaces, countertops, furniture, cabinet doors or other trim panels; and all of applications in the substrates mentioned above present good effect, and the manufacturing method of course is also applicable to substrates with treated surfaces.

And whether there is the matting agent or not, as long as the substrate is treated with the manufacturing method of the disclosure, the glossiness of the finally manufactured product is less than or equal to 1.5 GU and with good touch feeling.

Although the disclosure has been disclosed by the preferred embodiment in the above, it is not intended to limit the disclosure and any person familiar with the art can make some changes and embellishments without departing from the spirit and scope of the disclosure; therefore, the scope of protection of the disclosure should be subject to a scope of protection as claimed in the claims.

## Claims

1. A manufacturing method of an ultra-matte board, comprising:
a semi-curing step comprising: coating a UV paint on a substrate, and irradiating the coated substrate with an ultraviolet lamp with a wavelength ranging from 350 nm to 450 nm to semi-cure the UV paint;
an irradiating step with an ultraviolet excimer lamp comprising: placing the semi-cured substrate in an inert gas atmosphere and irradiating the substrate with an ultraviolet excimer lamp for 2 s to 20 s; and
a full curing step comprising: irradiating with an ultraviolet lamp with a wavelength ranging from 350 nm to 450 nm to fully cure the UV paint to obtain the ultra-matte board.

2. The manufacturing method of the ultra-matte board according to claim 1, wherein irradiation energy of the ultraviolet lamp used in the semi-curing step is 50 mJ/cm²- 150 mJ/cm², and irradiation energy of the ultraviolet lamp used in the curing step is 400 mJ/cm²- 800 mJ/cm².

3. The manufacturing method of the ultra-matte board according to claim 1, wherein a surface of the substrate is of unevenness.

4. The manufacturing method of the ultra-matte board according to any one of claims 1 to 3, wherein the inert gas is any one or combination of nitrogen, neon, argon, krypton and xenon, a charging pressure of the inert gas is equal to or more than 6 bar, purity of the inert gas is equal to or more than 99.999%, a flow rate of the inert gas is more than or equal to 80 m3/h.

5. The manufacturing method of the ultra-matte board according to any one of claims 1 to 3, wherein a coating method of the UV paint comprises any one or combination of printing process, rolling, curtain coating, knife coating, flow coating, dip coating, spray coating, spin coating and film pressing, and the printing process comprises any one or combination of gravure printing, flexographic printing, screen printing, pad printing or inkjet printing and transfer printing.

6. The manufacturing method of the ultra-matte board according to any one of claims 1 to 3, wherein the UV paint is an acrylic resin UV paint, and the UV paint comprises following components by weight:
30%-50% of acrylic resin,
25%- 45% of tripropylene glycol diacrylate,
1%- 5% of 2-hydroxy-2-methyl-l-phenyl-l-propanone.

7. The manufacturing method of the ultra-matte board according to claim 6, wherein the UV paint further comprises a matting agent.

8. The manufacturing method of the ultra-matte board according to claim 7, wherein the UV paint is an acrylic resin UV paint, and the UV paint comprises following components by weight:
20%- 50% of acrylic resin,
15%- 45% of tripropylene glycol diacrylate,
1%- 5% of 2-hydroxy-2-methyl-1-phenyl-1-propanone,
5%- 15% of fumed silica.

9. The manufacturing method of the ultra-matte board according to any one of claims 1 to 3, wherein the ultraviolet lamp used in the semi-curing step comprises any one or combination of a mercury lamp, a gallium lamps, an iron lamp and a LED lamp, and the ultraviolet lamp used in the full-curing step comprises any one or combination of a mercury lamp, a gallium lamp and an iron lamp, and the ultraviolet lamp used in the semi-curing step is or is not the same as that used in the full-curing step.

10. The manufacturing method of the ultra-matte board according to any one of claims 1 to 3, wherein an irradiation distance of the ultraviolet excimer lamp in the irradiating step with the ultraviolet excimer lamp is 5 cm- 20 cm.

11. The manufacturing method of the ultra-matte board according to any one of claims 1 to 3, wherein the manufacturing method of the ultra-matte board further comprises a preheating step before the semi-curing step, and the preheating step comprises preheating the substrate to 20°C to 30°C.

12. The manufacturing method of the ultra-matte board according to any one of claims 1 to 3, wherein the wavelength of the ultraviolet excimer lamp is 172 nm, power of the ultraviolet excimer lamp is 0.7 kw, and energy of the ultraviolet excimer lamp can be adjusted in a range of 10%- 100%.

13. The manufacturing method of the ultra-matte board according to any one of claims 1 to 3, wherein
the semi-curing step comprises: irradiating the substrate coated with the UV paint with the ultraviolet lamp with the wavelength ranging from 350 nm to 450 nm at a speed of 15 m/min to 25 m/min to semi-cure the UV paint;
the irradiating step with the ultraviolet excimer lamp comprises: passing the semi-cured substrate through an ultraviolet excimer lamp device and irradiating the substrate with the ultraviolet excimer lamp for 2 s- 20 s, with the inert gas being continuously introduced into the ultraviolet excimer lamp device;
the full curing step comprises: irradiating the substrate irradiated by the ultraviolet excimer lamp with the ultraviolet lamp with the wavelength ranging from 350 nm to 450 nm at a speed of 15 m/min to 25 m/min, to fully cure the UV paint and obtain the ultra-matte board.
